# EUROPEAN PATENT SPECIFICATION

(11) **EP 3 354 378 B1**
(45) Date of publication and mention of the grant of the patent: **13.11.2019**
(21) Application number: 17205805.9
(22) Date of filing: 07.12.2017
(51) Int. Cl.: B22F 3/105, B33Y 10/00, B33Y 30/00, B29C 64/153, B29C 64/264, B29C 35/08

(54) **MANUFACTURING METHOD AND APPARATUS**
HERSTELLUNGSVERFAHREN UND -VORRICHTUNG
PROCÉDÉ ET APPAREIL DE FABRICATION

(30) Priority: 06.01.2017 GB 201700170
(43) Date of publication of application: 01.08.2018
(73) Proprietor: Rolls-Royce plc, London SW1E 6AT (GB)
(72) Inventor: Boswell, John, Derby, Derbyshire DE24 8BJ (GB)
(74) Representative: Rolls-Royce plc

(56) References cited:
- WO-A1-2016/051163
- DE-A1-102013 205 029
- US-A1- 2014 263 209

## Description

### Field of the Invention

The present invention relates to an additive layer manufacturing method and apparatus for producing a three dimensional component. In particular, this invention relates to an additive layer manufacturing method for reducing cracking due to residual stress in the resulting component.

### Background of the Invention

In the aerospace industry, components manufactured by additive layer manufacturing (ALM) methods can have significant performance and weight advantages over components manufactured by more traditional methods.

Powder bed ALM methods construct components layer by layer by depositing powder on a build plate (also known as a base plate) and then selectively consolidating or fusing the powder using a laser or other heat source, such as an electron beam. These steps are repeated to produce a three dimensional component layer upon layer.

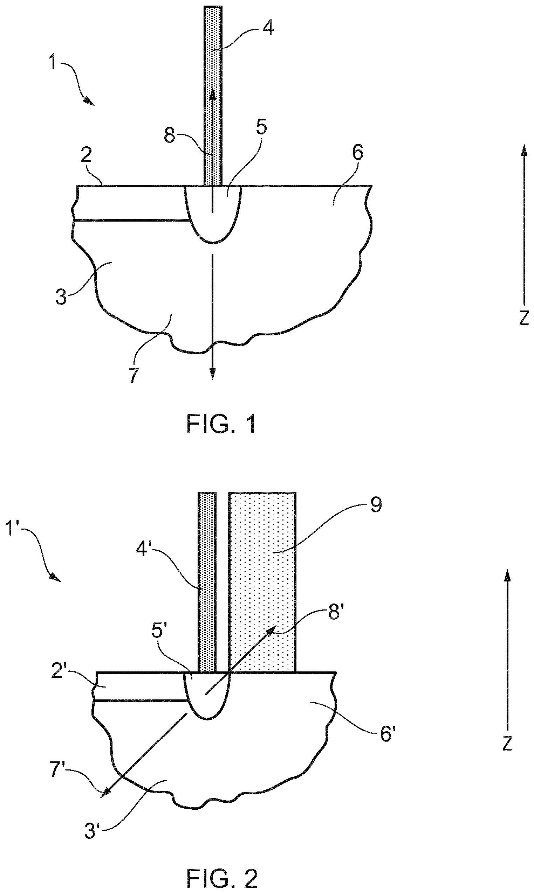

Figure 1 shows a side view of a standard single beam ALM system 1 with a layer of powder 2 deposited on previously fused material 3 which sits on a build plate (not shown). An energy beam, such as laser beam 4 is scanned over the powder layer 2 and melts the powder layer to form a melt pool 5 which then solidifies to fuse the powder material to form a solidified layer 6 forming part of the component. Further layers are formed on top of the solidified layer 6 in the build direction Z to form the three dimensional component.

Components produced using ALM methods inevitably contain inherent residual stresses resulting from large thermal gradients between the melt pool 5 and the solidified layer 6 and the resulting rapid cooling of the material in the melt pool 5. To manage and minimise these stresses, cooling and hence solidification rates of the component during manufacture are controlled. Controlling the cooling rate can also help determine grain size in the solidified material and this, in turn can be used to tailor the mechanical properties of the component. For example, large grain sizes impart better creep resistance whilst smaller grain sizes give improved high and low cycle fatigue resistance.

Cooling rate can be controlled by heating the build chamber during manufacture to reduce local thermal gradients or by pre-heating the powder locally prior to fusing. It is also known to use a pulsed laser system to control the amount of energy input into the build layer during ALM.

In US 2014/263209 A1 a method according to the state of the art is disclosed.

However, such methods do not address the main problem associated with cracking, which is the large thermal gradient associated with the high intensity heat source provided by the laser and the high thermal gradients associated with rapid heating and cooling.

Grain orientation in the solid material is also important in determining mechanical properties of the component. In the known single beam systems shown in Figure 1, the heat flux vector 7 is pointed directly away from the laser beam 4 as heat is conducted through the solidified material 3 towards the build plate. The grain growth vector 8 is in the opposite direction, and is the same in each layer. This results in high angle columnar grain boundaries in the build component which increases the likelihood of cracking.

There is a desire to provide a method that minimises residual stresses in components manufactured by ALM methods whilst ameliorating at least some of the problems associated with existing methods.

### Summary of the Invention

In a first aspect, the present invention provides a method of forming a three-dimensional component by additive layer manufacturing, said method comprising:
scanning a fusing energy beam having a fusing beam focus spot across a layer of powered material in a series of fusing scan lines to fuse the powder material to form a layer of fused material whilst scanning a heating energy beam having a heating beam focus spot in a series of heating scan lines across the material fused by the fusing energy beam,
wherein the centre of the fusing beam focus spot and the centre of the heating beam focus spot are off-set from one another and spaced by up to an amount equal to the sum of the radius (y) of the heating beam focus spot and two times the radius (x) of the fusing beam focus spot,
characterised in that when the vector extending between fusing beam focus spot and the heating beam focus spots is perpendicular or 45 degrees to the fusing scan line in first fusing/heating scan lines, the method comprises a first step of varying the angle of the vector extending between the centres of the fusing beam focus spot and heating beam focus spot by +90 degrees between first and second scan lines and a second step of varying the angle of the vector extending between the centres of the fusing beam focus spot and heating beam focus spot by -135 degrees between second and third scan lines.

By off-setting the centres of the focus spots (such that they are not coincident) and spacing them by up to an amount equal to y + 2x (where y is the radius of the heating beam focus spot and x is the radius of the fusing beam focus spot), the heating beam focus spot (which is located on the fused material previously fused by the fusing beam) abuts or overlaps the melt pool formed by the fusing beam (which is typically between 1.5 and 2 times the size of the fusing beam spot size). Accordingly, the heating beam focus spot heats the fused material adjacent the melt pool. Therefore, by scanning the heating energy beam (e.g. a laser or electron beam) over the layer of fused material whilst scanning the fusing energy beam (which may also be a laser or electron beam) in a series of scan lines over the layer of powdered material, it is possible the reduce the thermal gradient between the melted powder material in the melt pool and the adjacent fused material and thus reduce the cooling rate of the melted material. This results in a more uniform equiaxed grain structure in the fused material which, in turn reduces residual stresses and cracking in the resulting component. A reduction in the thermal gradient and residual stresses also reduce ductility drop cracking, which is believed to be an important crack forming mechanism in creep resistant nickel alloys built using ALM.

The reduction in cooling rate of the melted material also reduces the effects of surface tension-driven micro-segregation by reducing the thermal gradient in the melt pool and thus the convention that arises from the viscosity gradient within the melt pool. The effect is a reduction in the tendency for solidification cracking, as segregation is known to lead to fracture and stress relief cracking among other deleterious effects.

Furthermore, the offset heating beam focus spot alters the direction and magnitude of the heat flux vector and the grain growth vector. The principle cooling mechanism is still due to conduction through the fused material towards the build plate, but because of the heating by the heating energy beam, the heat flux vector is not pointed directly away from the fusing energy beam but is instead at an angle (less than 90°) to it. In turn, this means that the grain growth vector is also at an angle, anti-parallel to the heat flux vector which reduces high angle columnar grain boundaries in the build component which reduces the likelihood of cracking.

Optional features of the invention will now be set out. These are applicable singly or in any combination with any aspect of the invention.

The heating energy beam provides sufficient energy to heat the fused material but does not re-melt it. It may have a larger focus spot than the fusing beam focus spot.

The centres of the focus spots are off-set (with the centre of the heating beam focus spot positioned on the material previously fused by the fusing beam). In some embodiments, the centres of the focus spots are spaced by a minimum amount equal to y-x (where y and x are as defined above). In this embodiment, the heating beam focus spot will typically encompass the fusing beam focus spot (although they will not be coincident).

In some embodiments, the centres of the focus spots may be spaced by a maximum amount of about (x + y) (where x and y are as defined above). At this spacing the focus spots will abut one another.

In some embodiments, the fusing beam focus spot may be circular and may have a radius of between 25 and 125 microns.

In some embodiments, the heating beam focus spot may be circular or it may be elliptical and may have a radius between 2 to 4 times the radius of the fusing beam focus spot.

Where the heating beam focus spot is elliptical, the centre of the fusing beam focus spot will be aligned with the radius of the major (long) dimension of the elliptical heating beam focus spot and the radius y of the heating beam focus spot used to calculate the spacing between the centres of the focus spots will be in the major dimension.

The fusing scan lines may form any pattern over the powder material e.g. there may be a series of straight, parallel fusing scan lines extending across the entire of the layer of powder material or they may form an island or chequerboard pattern such as that shown in US2014/0154088. The heating scan lines will have the same pattern as the fusing scan lines and will extend either behind, ahead of or adjacent the fusing scan lines with at least a portion of the heating beam focus spot being on the material already fused by the fusing energy beam.

According to the invention, the method further comprises varying the angle of a vector extending between the centre of the fusing beam focus spot and the centre of the heating beam focus spot between two successive scan lines. In other words, the fusing energy beam and heating energy beam will both scan across their first respective fusing/heating scan line in a first angular relationship and then will scan across their second respective fusing/heating scan line in a second (different) angular relationship.

By changing the angular relation between the fusing beam focus spot and the heating beam focus spot between successive scan lines, the heat flux vector can be changed across the fused material layer. The grain growth vector is always directed anti-parallel to the heat flux vector. Changing the heat flux vector between successive scan lines produces a structure in which grains across the layer have a different orientation, disrupting epitaxial grain growth and texture of the microstructure.

The change in angular relationship is effected by adjusting the position of the heating beam focus spot relative to the fusing beams focus spot.

In some embodiments not according to the present invention, the method may comprise varying the angle of the vector extending between the centres of the fusing beam focus spot and heating beam focus spot between zero and 180 degrees in increments, each increment being applied between successive fusing/heating scan lines. In some embodiments not according to the present invention, the method may comprise varying the angle of the vector extending between the centres of the fusing beam focus spot and heating beam focus spot between 180 and zero degrees in increments, each increment being applied between successive fusing/heating scan lines.

Note that an angular relationship of zero degrees is where the vector is in the opposite direction to the fusing scan line (with the heating scan line effectively following the fusing scan line). An angular relationship of 180 degrees is where the vector is in the same direction as the fusing scan line (with the fusing scan line effectively following the heating scan line). An angular relationship of 90 degrees is where vector is perpendicular to the fusing scan line (with the heating and fusing scan lines adjacent and parallel).

In some embodiments not according to the present invention, the method comprises varying the angle of the vector extending between the centres of the fusing beam focus spot and heating beam focus spot by ±90 degrees between successive scan lines.

In some embodiments not according to the present invention, the method comprises varying the angle of the vector extending between the centres of the fusing beam focus spot and heating beam focus spot by ±135 degrees between successive scan lines.

In other words, the fusing energy beam and heating energy beam will both scan across their first respective fusing/heating scan lines in a first angular relationship and then will scan across their second respective fusing/heating scan lines in a second angular relationship, the first and second angular relationship differing by ±90 degrees or ±135 degrees. According to the invention, where the vector extending between fusing beam focus spot and the heating beam focus spots is perpendicular (90 degrees) or 45 degrees to the fusing scan line in first fusing/heating scan lines, the method may comprise a first step of varying the angle of the vector extending between the centres of the fusing beam focus spot and heating beam focus spot by +90 degrees between first and second scan lines and a second step of varying the angle of the vector extending between the centres of the fusing beam focus spot and heating beam focus spot by -135 degrees between second and third scan lines.

In one embodiment not according to the present invention, where the vector extending between fusing beam focus spot and the heating beam focus spots is at zero degrees to the fusing scan line in first fusing/heating scan lines, the method may comprise:
a first step of varying the angle of the vector extending between the centres of the fusing beam focus spot and heating beam focus spot by +90 degrees between first and second scan lines (such that the heating beam focus spot is at 90 degrees to the fusing beam focus spot);
a second step of varying the angle of the vector extending between the centres of the fusing beam focus spot and heating beam focus spot by +90 degrees between second and third scan lines (such that the heating beam focus spot is at 180 degrees to the fusing beam focus spot);
a third step of varying the angle of the vector extending between the centres of the fusing beam focus spot and heating beam focus spot by -135 degrees between third and fourth scan lines (such that the heating beam focus spot is at 45 degrees to the fusing beam focus spot);
a fourth step of varying the angle of the vector extending between the centres of the fusing beam focus spot and heating beam focus spot by +90 degrees between fourth and fifth scan lines (such that the heating beam focus spot is at 135 degrees to the fusing beam focus spot); and
a fifth step of varying the angle of the vector extending between the centres of the fusing beam focus spot and heating beam focus spot by -135 degrees between fifth and sixth scan lines (such that the heating beam focus spot returns to zero degrees relative to the fusing beam focus spot).

These steps may then be repeated.

In some embodiments not according to the present invention, where the vector extending between fusing beam focus spot and the heating beam focus spots is at zero or 45 degrees to the fusing scan line in first fusing/heating scan lines, the method may comprise a first step of varying the angle of the vector extending between the centres of the fusing beam focus spot and heating beam focus spot by +135 degrees between first and second scan lines and a second step of varying the angle of the vector extending between the centres of the fusing beam focus spot and heating beam focus spot by -90 degrees between second and third scan lines.

In one embodiment, where the vector extending between fusing beam focus spot and the heating beam focus spots is at zero degrees to the fusing scan line in first fusing/heating scan lines, the method may comprise:
a first step of varying the angle of the vector extending between the centres of the fusing beam focus spot and heating beam focus spot by +135 degrees between first and second scan lines (such that the heating beam focus spot is at 135 degrees to the fusing beam focus spot);
a second step of varying the angle of the vector extending between the centres of the fusing beam focus spot and heating beam focus spot by -90 degrees between second and third scan lines (such that the heating beam focus spot is at 45 degrees to the fusing beam focus spot);
a third step of varying the angle of the vector extending between the centres of the fusing beam focus spot and heating beam focus spot by +135 degrees between third and fourth scan lines (such that the heating beam focus spot is at 180 degrees to the fusing beam focus spot);
a fourth step of varying the angle of the vector extending between the centres of the fusing beam focus spot and heating beam focus spot by -90 degrees between fourth and fifth scan lines (such that the heating beam focus spot is at 90 degrees to the fusing beam focus spot); and
a fifth step of varying the angle of the vector extending between the centres of the fusing beam focus spot and heating beam focus spot by -90 degrees between fifth and sixth scan lines (such that the heating beam focus spot returns to zero degrees relative to the fusing beam focus spot).

These steps may then be repeated. These series of steps maximise the angular variation between the grain orientation thus maximising the desirable isotropy.

In some embodiments not according to the invention, the method may further comprise:
forming a further layer of fused material by scanning the fusing energy beam across a further layer of fusible powder material in a further series of fusing scan lines whilst scanning the heating energy beam in a further series of heating scan lines across the further material fused by the fusing energy beam; and
between forming the layer of fused material and the further layer of fused material, the method comprises varying the angle of a vector extending between the centre of the fusing beam focus spot and the centre of the heating beam focus spot.

In other words, the fusing energy beam and heating energy beam will both scan across their respective fusing/heating scan lines in a first (fixed) angular relationship to form the layer of fused material and then will scan across their respective fusing/heating scan lines in a second (different, fixed) angular relationship to form the further layer of fused material.

By changing the angular relation between the centre of the fusing beam focus spot and the centre of the heating beam focus spot between successive layers, the heat flux vector can be changed between layers. The grain growth vector is always directed anti-parallel to the heat flux vector. Changing the heat flux vector between successive build layers produces a layered structure in which grains in successive layers have a different orientation, disrupting epitaxial grain growth and texture of the microstructure. This, in turn, reduces internal stresses caused by the high angle columnar grain boundaries and thus cracking/fracture in the resulting component.

In some embodiments not according to the invention, the method comprises varying the angle of the vector extending between the fusing beam focus spot and the heating beam focus by 90 or 135 degrees between forming the layer of fused material and the further layer of fused material. In other words, the fusing energy beam and heating energy beam will both scan across their respective fusing/heating scan lines in a first angular relationship to form the layer of fused material and then will scan across their respective fusing/heating scan lines in a second angular relationship, the first and second angular relationship differing by 90 degrees or 135 degrees.

The method may comprise varying the orientation of the fusing and heating scan lines between the formation of the layer of fused material and the further layer of fused material e.g. by rotation , for example by rotation through 67 degrees.

The method may comprise modulating the heating energy beam. The slower cooling rate of the melted powder material results in the formation of cellular dendrite structures in the fused material. Modulation of the heating energy beam leads to vibration of the fused material thus fracturing the cellular dendrite microstructure and promoting secondary nucleation of grains with a random dendritic orientation.

In some embodiments, the method comprises heating the or each layer of fusible powder material prior to and/or during scanning by the fusing energy beam. The fusible powder could be heating using resistance or induction heating for example.

In some embodiments, the three-dimensional component is heat-treated after manufacture e.g. using HIP, annealing or precipitation hardening.

In some embodiments, the method comprises forming the three dimensional component using selective laser melting (SLM) or selective laser sintering (SLS).

In some embodiments, the method comprises forming a hot gas path component for a gas turbine. For example, the method could comprise forming a combustor liner, a seal segment, a nozzle guide vane, a pre-swirl nozzle, an OGV ring or a turbine blade.

In some embodiments the powder material may be formed of metal or metal alloy e.g. from nickel, copper, iron, steel, nickel alloys, titanium, titanium alloys, magnesium, magnesium alloys, aluminium, aluminium alloys, vanadium, zirconium, hafnium, or refractory metals such as niobium, molybdenum, tantalum, tungsten and rhenium. The powder material may be a metal matrix composite or intermetallic such as TiAl or NiAI. In particular, the powder material may be a powdered super-alloy, such as a nickel-based super alloys such as MARM002, CM247LC or IN738.

In a second aspect, the present invention provides an apparatus for forming a three-dimensional component by additive layer manufacturing, said apparatus comprising:
a fusing energy beam generator adapted to generate a fusing energy beam having a fusing beam focus spot;
a heating energy beam generator adapted to generate a heating energy beam having a heating beam focus spot wherein the fusing beam focus spot is smaller in diameter than the heating beam focus spot,
wherein the fusing energy beam generator is adapted to scan the fusing energy beam across a layer of powdered material in a series of fusing scan lines to fuse the powder material to form a layer of fused material whilst the heating energy beam generator is adapted to scan the heating energy beam in a series of heating scan lines across the material fused by the fusing energy beam such that the centre of the fusing beam focus spot and the centre of the heating beam focus spot are off-set from one another and spaced by up to an amount equal to the sum of the radius (y) of the heating beam focus spot and two times the radius (x) of the fusing beam focus spot,
characterised in that when the vector extending between fusing beam focus spot and the heating beam focus spots is perpendicular or 45 degrees to the fusing scan line in first fusing/heating scan lines, the method comprises a first step of varying the angle of the vector extending between the centres of the fusing beam focus spot and heating beam focus spot by +90 degrees between first and second scan lines and a second step of varying the angle of the vector extending between the centres of the fusing beam focus spot and heating beam focus spot by -135 degrees between second and third scan lines.

In some embodiments, the fusing energy beam generator and heating energy beam generator are adapted to produce the fusing energy beam and heating energy beam such that centres of the focus spots are spaced by a minimum amount equal to y-x (where y and x are as defined above). In this embodiment, the heating beam focus spot will typically encompass the fusing beam focus spot (although they will not be coincident).

In some embodiments, the fusing energy beam generator and heating energy beam generator are adapted to produce the fusing energy beam and heating energy beam such that centres of the focus spots are spaced by a maximum amount equal to x + y (where y and x are as defined above). At this spacing the focus spots will abut one another.

In some embodiments, the fusing energy beam generator may be adapted to generate a fusing beam focus spot which is circular and may have a radius of between 25 and 125 microns.

In some embodiments, the heating energy beam generator may be adapted to generate a heating beam focus spot which is circular or elliptical and may have a radius between 2 to 4 times the radius of the fusing beam focus spot.

Where the heating energy beam generator is adapted to generate an elliptical heating beam focus spot, the fusing energy beam generator is adapted to generate the centre of the fusing beam focus spot aligned with the radius of the major (long) dimension of the elliptical heating beam focus spot and the radius y of the heating beam focus spot used to calculate the spacing between the centres of the focus spots will be in the major dimension.

In some embodiments, the fusing energy beam generator is adapted to scan the fusing energy beam in a series of fusing scan lines which may form any pattern over the powder material e.g. it may be adapted to scan the fusing energy beam in a series of straight, parallel fusing scan lines extending across the entire of the layer of powder material or in a series of lines that form an island or chequerboard pattern such as that shown in US2014/0154088. The heating energy beam generator will be adapted to scan the heating energy beam in a series of heating scan lines which will have the same pattern as the fusing scan lines and will extend either behind, ahead of or adjacent the fusing scan lines with at least a portion of the heating beam focus spot being on the material already fused by the fusing energy beam.

In some embodiments not according to the invention, the heating energy beam generator may be adapted to vary the angle of a vector extending between the centre of the fusing beam focus spot and the heating beam focus spot between two successive scan lines or between the formation of successive layers of fused material.

In order to effect the change in angular relationship, the heating energy beam generator may be adapted to adjusting the position of the heating beam focus spot relative to the fusing beams focus spot.

In some embodiments not according to the invention, the heating beam generator may be adapted to vary the angle of the vector extending between the centres of the fusing beam focus spot and heating beam focus spot between zero and 180 degrees in increments, each increment being applied between successive fusing/heating scan lines. In some embodiments, the heating beam generator may be adapted to vary the angle of the vector extending between the centres of the fusing beam focus spot and heating beam focus spot between 180 and zero degrees in increments, each increment being applied between successive fusing/heating scan lines.

In some embodiments not according to the invention, the heating beam generator may be adapted to vary the angle of the vector extending between the centres of the fusing beam focus spot and heating beam focus spot by ±90 degrees between successive scan lines.

In some embodiments not according to the invention, the heating beam generator may be adapted to vary the angle of the vector extending between the centres of the fusing beam focus spot and heating beam focus spot by ±135 degrees between successive scan lines. The heating beam generator may be adapted to modulate the heating energy beam by pulsing the heating energy beam.

The apparatus may further comprise a heater e.g. an induction heater or a resistance heater for heating the fusible powdered material.

### Brief Description of the Drawings

Embodiments of the invention will now be described by way of example with reference to the accompanying drawings in which:
Figure 1 shows a side view of a standard prior art single beam ALM system;
Figure 2 shows a side view of first embodiment of the present invention;
Figure 3 shows a top view of the first embodiment of the present invention;
Figure 4 shows a second, alternative spacing of the focus spot;
Figure 5 shows a third, alternative spacing of the focus spots;
Figure 6 shows a fourth, alternative spacing of the focus spots with ann elliptical heating beam focus spot; and
Figure 7 shows a schematic representation of the angular variation between the fusing energy beam and heating energy beam.

### Detailed Description and Further Optional Features of the Invention

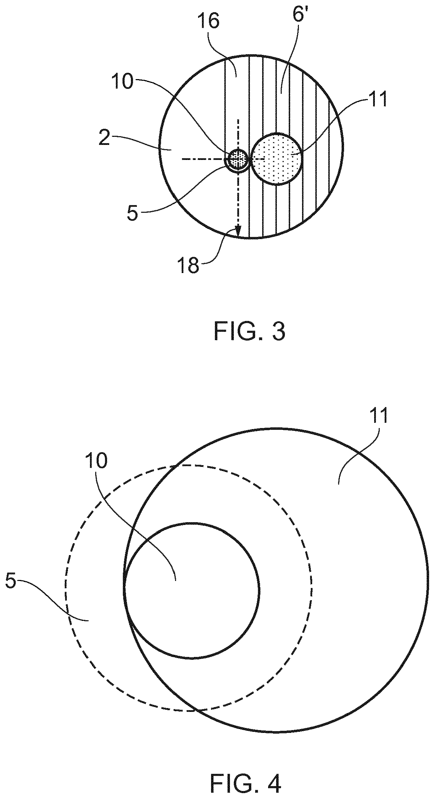

Figures 2 and 3 show side and top views of an additive layer manufacturing apparatus/method according to a first embodiment of the present invention with a layer 2' of powder material (such as a powdered nickel based super alloy) deposited on previously fused material 3' which sits on a build plate (not shown).

A fusing energy beam, such as laser beam 4' is provided and is focussed on the powder layer 2' and melts the powder layer to form a melt pool 5' of melted material which then solidifies to fuse the powder material to form a layer of fused material layer 6' forming part of the component (together with the fused material 3'). The fusing energy laser beam 4' is scanned across the powder layer 2' in a series of fusing scan lines.

A heating energy beam such as laser beam 9 is also provided. The heating energy beam 9 is modulated. This is scanned across the fused material layer 6' simultaneously with the fusing energy beam 4'. As shown in Figure 3, the fusing beam focus spot 10 is smaller in diameter than the heating beam focus spot 11.

The fusing beam focus spot 10 and the heating beam focus spot 11 are off set from one another and spaced by an amount equal to the sum of the radii of the focus spots 10, 11 such that the circumference of the heating beam focus spot 11 abuts the melt pool 5 of melted material formed by the fusing energy beam 4'.

Alternative embodiments are shown in Figures 4 - 6.

In Figure 4, the fusing beam focus spot 10 and the heating beam focus spot 11 are spaced by an amount equal to y - x where y is the radius of the heating beam spot and x is the radius of the fusing beam spot. In this embodiment, the fusing beam focus spot is within the heating beam focus spot (but not coincident with it).

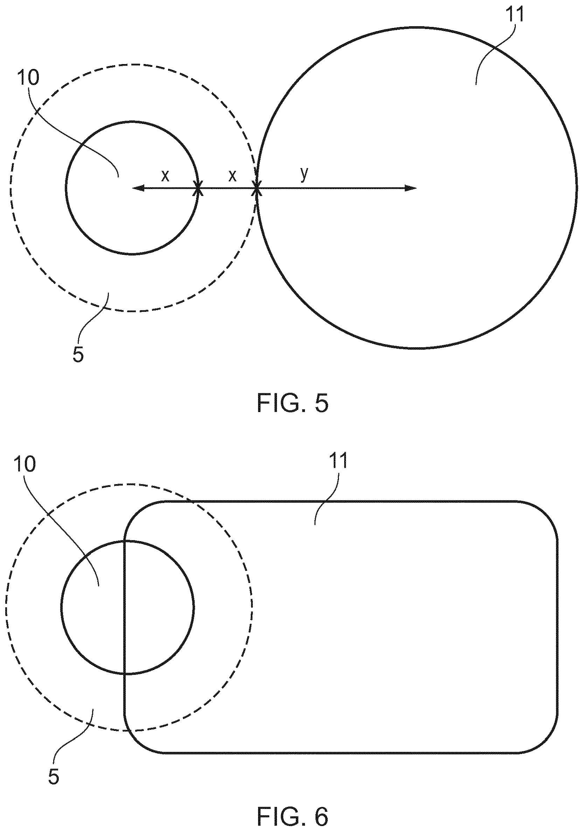

In Figure 5, the fusing beam focus spot 10 and the heating beam focus spot 11 are spaced by an amount equal to y + 2x where y is the radius of the heating beam spot and x is the radius of the fusing beam spot. In this embodiment, the heating beam focus spot abuts the melt pool 5 created around the heating beam focus spot.

In Figure 6, the heating beam focus spot is elliptical and the fusing beam focus spot 10 and the heating beam focus spot 11 are spaced by an amount greater than y - x where y is the major radius of the heating beam spot and x is the radius of the fusing beam spot. In this embodiment, the fusing beam focus spot and the heating beam focus spot overlap.

By off-setting the centres of the focus spots 10, 11 and spacing them by up to an amount equal to the sum of the radius of the heating beam focus spot 11 and two times the radius of the fusing beam focus spot 10, the heating beam focus spot 11 abuts or overlaps the melt pool 5 formed by the fusing beam 4' (which is typically between 1.5 and 2 times the size of the fusing beam spot size).

By scanning the heating energy beam 9 over the fused material 6' whilst scanning the fusing energy beam 4' in a series of scan lines over the powder layer 2',it is possible the reduce the thermal gradient between the melted material and the fused material layer 6' and thus reduce the cooling rate of the melted material. This results in a more uniform equiaxed grain structure in the fused material 3' which, in turn reduces residual stresses and cracking in the resulting component. A reduction in the thermal gradient and residual stresses also reduce ductility drop cracking.

Furthermore, the heating energy beam 9 alters the direction and magnitude of the heat flux vector 7' and the grain growth vector 8'. The principle cooling mechanism is still due to conduction through the fused material 3 towards the build plate, but because of heating by the heating energy beam 9 the heat flux vector 7' is not aligned directly away from the fusing energy beam 4' but is instead at an angle (less than 90°) to it. In turn, this means that the grain growth vector 8' is also at an angle, anti-parallel to the heat flux vector 7' which reduces high angle columnar grain boundaries in the build component which reduces the likelihood of cracking.

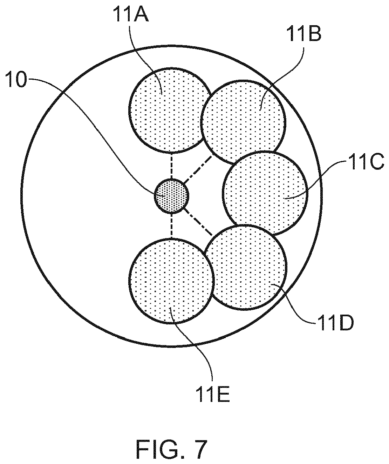

Figure 7 shows a schematic representation of the relative positioning of the heating beam focus spot 11A-11E and the fusing beam focus spot 10 during successive scan lines.

Initially the vector extending between fusing beam focus spot 10 and the heating beam focus spot 11A is at zero degrees to the fusing scan line. Between the first and second scan lines, the angle of the vector is varied by +90 degrees (such that the heating beam focus spot 11C is at 90 degrees to the fusing beam focus spot 10. Next, the angle of the vector is varied by +90 degrees between second and third scan lines (such that the heating beam focus spot 11E is at 180 degrees to the fusing beam focus spot 10). Between the third and fourth scan lines, the angle of the vector is varied by -135 degrees (such that the heating beam focus spot 11B is at 45 degrees to the fusing beam focus spot 10. Next, the angle of the vector is varied by +90 degrees between fourth and fifth scan lines (such that the heating beam focus spot 11D is at 135 degrees to the fusing beam focus spot 10) and, finally, the angle of vector the vector is varied by -135 degrees between fifth and sixth scan lines (such that the heating beam focus spot 11A returns to zero degrees relative to the fusing beam focus spot 10

These steps may then be repeated.

By changing the angular relation between the fusing beam focus spot 10 and the heating beam focus spot (11A - 11E) between successive scan lines, the heat flux vector 7' can be changed across the layer of used material 6'. The grain growth vector 8' is always directed anti-parallel to the heat flux vector 7'. Changing the heat flux vector 7' between successive scan lines produces a structure in which grains have a different orientation, disrupting epitaxial grain growth and texture of the microstructure. This, in turn, reduces internal stresses caused by the high angle columnar grain boundaries and thus cracking/fracture in the resulting component.

In order to build up the component, multiple layers are built as described above one upon another in the build direction Z. The orientation of the fusing scan lines may be changed by 67 degrees between successive layers.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the scope of the claims.

## Claims

1. A method of forming a three-dimensional component by additive layer manufacturing, said method comprising:
scanning a fusing energy beam (4') having a fusing beam focus spot across a layer (2') of powdered material in a series of fusing scan lines to fuse the powder material to form a layer of fused material whilst scanning a heating energy beam (9) having a heating beam focus spot in a series of heating scan lines across the material fused by the fusing energy beam,
wherein the centre of the fusing beam focus spot (10) and the centre of the heating beam focus spot (11) are off-set from one another and spaced by up to an amount equal to the sum of the radius (y) of the heating beam focus spot and two times the radius (x) of the fusing beam focus spot;
**the method characterised in that** when the vector extending between fusing beam focus spot and the heating beam focus spots is perpendicular (90 degrees) or 45 degrees to the fusing scan line in first fusing/heating scan lines, the method comprises a first step of varying the angle of the vector extending between the centres of the fusing beam focus spot and heating beam focus spot by +90 degrees between first and second scan lines and a second step of varying the angle of the vector extending between the centres of the fusing beam focus spot and heating beam focus spot by -135 degrees between second and third scan lines.

2. A method according to claim 1 wherein the centres of the focus spots are spaced by a minimum amount equal to y-x, where y and x are as defined above.

3. A method according to claim 1 or 2 wherein the centres of the focus spots are spaced by a maximum amount of x + y, where x and y are as described above.

4. A method according to any one of the preceding claims further comprising varying the angle of a vector extending between the centre of the fusing beam focus spot and the centre of the heating beam focus spot between two successive scan lines.

5. A method according to claim 4 comprising varying the angle of the vector extending between the centres of the fusing beam focus spot (10) and heating beam focus spot (11A-11E) between zero and 180 degrees in increments, each increment being applied between successive fusing/heating scan lines and/or varying the angle of the vector extending between the centres of the fusing beam focus spot and heating beam focus spot between 180 and zero degrees in increments, each increment being applied between successive fusing/heating scan lines.

6. A method according to claim 4 or 5 wherein, when the vector extending between fusing beam focus spot and the heating beam focus spots is at zero degrees to the fusing scan line in first fusing/heating scan lines, the method comprises:
a first step of varying the angle of the vector extending between the centres of the fusing beam focus spot and heating beam focus spot by +90 degrees between first and second scan lines;
a second step of varying the angle of the vector extending between the centres of the fusing beam focus spot and heating beam focus spot by +90 degrees between second and third scan lines;
a third step of varying the angle of the vector extending between the centres of the fusing beam focus spot and heating beam focus spot by -135 degrees between third and fourth scan lines;
a fourth step of varying the angle of the vector extending between the centres of the fusing beam focus spot and heating beam focus spot by +90 degrees between fourth and fifth scan lines; and
a fifth step of varying the angle of the vector extending between the centres of the fusing beam focus spot and heating beam focus spot by -135 degrees between fifth and sixth scan lines.

7. A method according to claim 4 or 5 wherein, when the vector extending between fusing beam focus spot and the heating beam focus spots is at zero or 45 degrees to the fusing scan line in first fusing/heating scan lines, the method comprises a first step of varying the angle of the vector extending between the centres of the fusing beam focus spot and heating beam focus spot by +135 degrees between first and second scan lines and a second step of varying the angle of the vector extending between the centres of the fusing beam focus spot and heating beam focus spot by -90 degrees between second and third scan lines.

8. A method according to claim 4 or 5 wherein, when the vector extending between fusing beam focus spot and the heating beam focus spots is at zero degrees to the fusing scan line in first fusing/heating scan lines, the method comprises:
a first step of varying the angle of the vector extending between the centres of the fusing beam focus spot and heating beam focus spot by +135 degrees between first and second scan lines;
a second step of varying the angle of the vector extending between the centres of the fusing beam focus spot and heating beam focus spot by -90 degrees between second and third scan lines;
a third step of varying the angle of the vector extending between the centres of the fusing beam focus spot and heating beam focus spot by +135 degrees between third and fourth scan lines;
a fourth step of varying the angle of the vector extending between the centres of the fusing beam focus spot and heating beam focus spot by -90 degrees between fourth and fifth scan lines; and
a fifth step of varying the angle of the vector extending between the centres of the fusing beam focus spot and heating beam focus spot by -90 degrees between fifth and sixth scan lines.

9. A method according to any one of claims 1 to 3 comprising:
forming a further layer of fused material by scanning the fusing energy beam across a further layer of fusible powder material in a further series of fusing scan lines whilst scanning the heating energy beam in a further series of heating scan lines across the further material fused by the fusing energy beam; and
between forming the layer of fused material and the further layer of fused material, the method comprises varying the angle of a vector extending between the centre of the fusing beam focus spot and the centre of the heating beam focus spot.

10. An apparatus for forming a three-dimensional component by additive layer manufacturing, said apparatus comprising:
a fusing energy beam generator adapted to generate a fusing energy beam having a fusing beam focus spot;
a heating energy beam generator adapted to generate a heating energy beam having a heating beam focus spot,
wherein the fusing energy beam generator is adapted to scan the fusing energy beam across a layer of powdered material in a series of fusing scan lines to fuse the powder material to form a layer of fused material whilst the heating energy beam generator is adapted to scan the heating energy beam in a series of heating scan lines across the material fused by the fusing energy beam such that the centre of the fusing beam focus spot and the centre of the heating beam focus spot are off-set from one another and spaced by up to an amount equal to the sum of the radius (y) of the heating beam focus spot and two times the radius (x) of the fusing beam focus spot.
**the apparatus characterised in that** in use when the vector extending between the fusing energy beam and the heating energy beam is perpendicular (90 degrees) or 45 degrees to the fusing scan line in first fusing/heating scan lines, the fusing energy beam generator and the heating energy beam generator are adapted first to vary the angle of the vector extending between the centres of the fusing energy beam and the heating energy beam by +90 degrees between first and second scan lines and second to vary the angle of the vector extending between the centres of the fusing energy beam and the heating energy beam by -135 degrees between second and third scan lines.

11. Apparatus according to claim 10 wherein the fusing energy beam generator and heating energy beam generator are adapted to produce the fusing energy beam and heating energy beam such that centres of the focus spots are spaced by a minimum amount equal to y-x, where y and x are as defined above.

12. Apparatus according to claim 10 or 11 wherein the fusing energy beam generator and heating energy beam generator are adapted to produce the fusing energy beam and heating energy beam such that centres of the focus spots are spaced by a maximum amount equal to x + y, where y and x are as defined above.

13. Apparatus according to any one of claims 10 to 12 wherein the heating energy beam generator is adapted to vary the angle of a vector extending between the centre of the fusing beam focus spot and the heating beam focus spot between two successive scan lines or between the formation of successive layers of fused material.

14. An apparatus according to any one of claims 10 to 13 wherein the heating beam generator is adapted to modulate the heating energy beam by pulsing the heating energy beam.

## Patentansprüche

1. Verfahren zum Bilden einer dreidimensionalen Komponente durch additive Fertigung, wobei das Verfahren umfasst:
Scannen eines Schmelzenergiestrahls (4') mit einem Schmelzstrahlfokusfleck über eine Schicht (2') aus pulverförmigem Material in einer Reihe von Schmelzscanzeilen, um das Pulvermaterial zu einer Schicht aus geschmolzenem Material zu verschmelzen, während ein Heizenergiestrahl (9) mit einem Heizstrahlfokusfleck in einer Reihe von Heizscanzeilen über das durch den Fusionsenergiestrahl verschmolzene Material gescannt wird,
wobei der Mittelpunkt des Schmelzstrahlfokusflecks (10) und der Mittelpunkt des Heizstrahlfokusflecks (11) voneinander versetzt und bis zu einem Betrag beabstandet sind, der gleich der Summe des Radius (y) des Heizstrahlfokusflecks und des zweifachen Radius (x) des Schmelzstrahlfokusflecks ist;
**wobei das Verfahren dadurch gekennzeichnet ist, dass,** wenn der Vektor, der sich zwischen dem Schmelzstrahlfokusfleck und den Heizstrahlfokusflecken erstreckt, senkrecht (90 Grad) oder 45 Grad zu der Schmelzscanzeile in ersten Schmelz-/Heizscanzeilen ist, das Verfahren einen ersten Schritt des Variierens des Winkels des Vektors, der sich zwischen den Mittelpunkten des Schmelzstrahlfokusflecks und des Heizstrahlfokusflecks erstreckt, um +90 Grad zwischen einer ersten und einer zweiten Scanzeile, und einen zweiten Schritt des Variierens des Winkels des Vektors, der sich zwischen den Mittelpunkten des Schmelzstrahlfokusflecks und des Heizstrahlfokusflecks erstreckt, um -135 Grad zwischen einer zweiten und einer dritten Scanzeile umfasst.

2. Verfahren nach Anspruch 1, wobei die Mittelpunkte der Fokusflecke um einen Mindestbetrag beabstandet sind, der gleich y-x ist, wobei y und x wie oben definiert sind.

3. Verfahren nach Anspruch 1 oder 2, wobei die Mittelpunkte der Fokusflecke um einen Maximalbetrag x + y beabstandet sind, wobei x und y wie oben definiert sind.

4. Verfahren nach einem der vorhergehenden Ansprüche, ferner umfassend ein Variieren des Winkels eines Vektors, der sich zwischen dem Mittelpunkt des Schmelzstrahlfokusflecks und dem Mittelpunkt des Heizstrahlfokusflecks erstreckt, zwischen zwei aufeinanderfolgenden Scanzeilen.

5. Verfahren nach Anspruch 4, umfassend ein Variieren des Winkels des Vektors, der sich zwischen den Mittelpunkten des Schmelzstrahlfokusflecks (10) und Heizstrahlfokusflecks (11A-11E) erstreckt, zwischen null und 180 Grad in Inkrementen, wobei jedes Inkrement zwischen aufeinanderfolgenden Schmelz-/Heizscanzeilen angewendet wird, und/oder ein Variieren des Winkels des Vektors, der sich zwischen den Mittelpunkten des Schmelzstrahlfokusflecks und des Heizstrahlfokusflecks erstreckt, zwischen 180 und null Grad in Inkrementen, wobei jedes Inkrement zwischen aufeinanderfolgenden Schmelz-/Heizscanzeilen angewendet wird.

6. Verfahren nach Anspruch 4 oder 5, wobei, wenn sich der Vektor, der sich zwischen einem Schmelzstrahlfokusfleck und den Heizstrahlfokusflecken erstreckt, bei null Grad zur Schmelzscanzeile in ersten Schmelz/Heizscanzeilen befindet, das Verfahren umfasst:
einen ersten Schritt des Variierens des Winkels des Vektors, der sich zwischen den Mittelpunkten des Schmelzstrahlfokusflecks und des Heizstrahlfokusflecks erstreckt, um +90 Grad zwischen einer ersten und einer zweiten Scanzeile;
einen zweiten Schritt des Variierens des Winkels des Vektors, der sich zwischen den Mittelpunkten des Schmelzstrahlfokusflecks und des Heizstrahlfokusflecks erstreckt, um +90 Grad zwischen einer zweiten und einer dritten Scanzeile;
einen dritten Schritt des Variierens des Winkels des Vektors, der sich zwischen den Mittelpunkten des Schmelzstrahlfokusflecks und des Heizstrahlfokusflecks erstreckt, um -135 Grad zwischen einer dritten und einer vierten Scanzeile;
einen vierten Schritt des Variierens des Winkels des Vektors, der sich zwischen den Mittelpunkten des Schmelzstrahlfokusflecks und des Heizstrahlfokusflecks erstreckt, um +90 Grad zwischen einer vierten und einer fünften Scanzeile;
und einen fünften Schritt des Variierens des Winkels des Vektors, der sich zwischen den Mittelpunkten des Schmelzstrahlfokusflecks und des Heizstrahlfokusflecks erstreckt, um -135 Grad zwischen einer fünften und einer sechsten Scanzeile.

7. Verfahren nach Anspruch 4 oder 5, wobei, wenn sich der Vektor, der sich zwischen einem Schmelzstrahlfokusfleck und den Heizstrahlfokusflecken erstreckt, bei null oder 45 Grad zur Schmelzscanzeile in ersten Schmelz-/Heizscanzeilen befindet, das Verfahren einen ersten Schritt des Variierens des Winkels des Vektors, der sich zwischen den Mittelpunkten des Schmelzstrahlfokusflecks und des Heizstrahlfokusflecks erstreckt, um +135 Grad zwischen einer ersten und einer zweiten Scanzeile, und einen zweiten Schritt des Variierens des Winkels des Vektors, der sich zwischen den Mittelpunkten des Schmelzstrahlfokusflecks und des Heizstrahlfokusflecks, erstreckt, um -90 Grad zwischen einer zweiten und einer dritten Scanzeile umfasst.

8. Verfahren nach Anspruch 4 oder 5, wobei, wenn sich der Vektor, der sich zwischen einem Schmelzstrahlfokusfleck und den Heizstrahlfokusflecken erstreckt, bei null Grad zur Schmelzscanzeile in ersten Schmelz/Heizscanzeilen befindet, das Verfahren umfasst:
einen ersten Schritt des Variierens des Winkels des Vektors, der sich zwischen den Mittelpunkten des Schmelzstrahlfokusflecks und des Heizstrahlfokusflecks erstreckt, um +135 Grad zwischen einer ersten und einer zweiten Scanzeile;
einen zweiten Schritt des Variierens des Winkels des Vektors, der sich zwischen den Mittelpunkten des Schmelzstrahlfokusflecks und des Heizstrahlfokusflecks erstreckt, um -90 Grad zwischen einer zweiten und einer dritten Scanzeile;
einen dritten Schritt des Variierens des Winkels des Vektors, der sich zwischen den Mittelpunkten des Schmelzstrahlfokusflecks und des Heizstrahlfokusflecks erstreckt, um +135 Grad zwischen einer dritten und einer vierten Scanzeile;
einen vierten Schritt des Variierens des Winkels des Vektors, der sich zwischen den Mittelpunkten des Schmelzstrahlfokusflecks und des Heizstrahlfokusflecks erstreckt, um -90 Grad zwischen einer vierten und einer fünften Scanzeile;
und einen fünften Schritt des Variierens des Winkels des Vektors, der sich zwischen den Mittelpunkten des Schmelzstrahlfokusflecks und des Heizstrahlfokusflecks erstreckt, um -90 Grad zwischen einer fünften und einer sechsten Scanzeile.

9. Verfahren nach einem der Ansprüche 1 bis 3, umfassend:
Ausbilden einer weiteren Schicht aus geschmolzenem Material durch Scannen des Schmelzenergiestrahls über eine weitere Schicht aus schmelzbarem Pulvermaterial in einer weiteren Reihe von Schmelzscanzeilen, während der Heizenergiestrahl in einer weiteren Reihe von Heizscanzeilen über das weitere Material, das durch den Schmelzenergiestrahl verschmolzen wird, gescannt wird;
und wobei das Verfahren zwischen dem Ausbilden der Schicht aus geschmolzenem Material und der weiteren Schicht aus geschmolzenem Material ein Variieren des Winkels eines Vektors, der sich zwischen dem Mittelpunkt des Schmelzstrahlfokusflecks und dem Mittelpunkt des Heizstrahlfokusflecks erstreckt, umfasst.

10. Vorrichtung zum Bilden einer dreidimensionalen Komponente durch additive Fertigung, wobei die Vorrichtung umfasst:
einen Schmelzenergiestrahlgenerator, der dazu ausgestaltet ist, einen Schmelzenergiestrahl mit einem Schmelzstrahlfokusfleck zu erzeugen;
einen Heizenergiestrahlgenerator, der dazu ausgestaltet ist, einen Heizenergiestrahl mit einem Heizstrahlfokusfleck zu erzeugen, wobei der Schmelzenergiestrahlgenerator dazu ausgestaltet ist, den Schmelzenergiestrahl über eine Schicht aus pulverförmigem Material in einer Reihe von Schmelzscanzeilen zu scannen, um das Pulvermaterial unter Bildung einer Schicht aus geschmolzenem Material zu verschmelzen, während ein Heizenergiestrahlgenerator dazu ausgestaltet ist, den Heizenergiestrahl in einer Reihe von Heizscanzeilen über das durch den Fusionsenergiestrahl verschmolzene Material zu scannen, sodass der Mittelpunkt des Schmelzstrahlfokusflecks und der Mittelpunkt des Heizstrahlfokusflecks voneinander versetzt und bis zu einem Betrag beabstandet sind, der gleich der Summe des Radius (y) des Heizstrahlfokusflecks und des zweifachen Radius (x) des Schmelzstrahlfokusflecks ist;
**wobei die Vorrichtung dadurch gekennzeichnet ist, dass,** wenn der Vektor, der sich zwischen dem Schmelzenergiestrahl und dem Heizenergiestrahl erstreckt, senkrecht (90 Grad) oder 45 Grad zu der Schmelzscanzeile in ersten Schmelz-/Heizscanzeilen ist, der Schmelzenergiestrahlgenerator und der Heizenergiestrahlgenerator dazu ausgestaltet sind, als Erstes des Winkels des Vektors, der sich zwischen den Mittelpunkten des Schmelzenergiestrahls und des Heizenergiestrahls erstreckt, um +90 Grad zwischen einer ersten und einer zweiten Scanzeile zu variieren, und als Zweites den Winkel des Vektors, der sich zwischen den Mittelpunkten des Schmelzenergiestrahls und des Heizenergiestrahls erstreckt, um -135 Grad zwischen einer zweiten und einer dritten Scanzeile zu variieren.

11. Vorrichtung nach Anspruch 10, wobei der Schmelzenergiestrahlgenerator und der Heizenergiestrahlgenerator dazu ausgestaltet sind, den Schmelzenergiestrahl und den Heizenergiestrahl derart zu produzieren, dass die Mittelpunkte der Fokusflecke um einen Mindestbetrag beabstandet sind, der gleich y-x ist, wobei y und x wie oben definiert sind.

12. Vorrichtung nach Anspruch 10 oder 11, wobei der Schmelzenergiestrahlgenerator und der Heizenergiestrahlgenerator dazu ausgestaltet sind, den Schmelzenergiestrahl und den Heizenergiestrahl derart zu produzieren, dass die Mittelpunkte der Fokusflecke um einen Maximalbetrag gleich x + y beabstandet sind, wobei x und y wie oben definiert sind.

13. Vorrichtung nach einem der Ansprüche 10 bis 12, wobei der Heizenergiestrahlgenerator dazu ausgestaltet ist, den Winkel eines Vektors, der sich zwischen dem Mittelpunkt des Schmelzstrahlfokusflecks und dem Heizstrahlfokusfleck erstreckt, zwischen zwei aufeinanderfolgenden Scanzeilen oder zwischen der Bildung von aufeinanderfolgenden Schichten aus geschmolzenem Material zu variieren.

14. Vorrichtung nach einem der Ansprüche 10 bis 13, wobei der Heizstrahlgenerator dazu ausgestaltet ist, den Heizenergiestrahl durch Pulsen des Heizenergiestrahls zu modulieren.

## Revendications

1. Méthode de réalisation d'un composant tridimensionnel par fabrication de couche additive, ladite méthode comprenant :
le balayage d'un faisceau d'énergie de fusion (4') possédant un point de focalisation de faisceau de fusion sur une couche (2') de matériau en poudre dans une série de lignes de balayage de fusion pour fusionner le matériau en poudre afin de former une couche de matériau fusionné tout en balayant un faisceau d'énergie de chauffage (9) possédant un point de focalisation de faisceau de chauffage dans une série de lignes de balayage de chauffage sur le matériau fusionné par le faisceau d'énergie de fusion, le centre du point de focalisation de faisceau de fusion (10) et le centre du point de focalisation de faisceau de chauffage (11) étant décalés l'un de l'autre, et séparés par un espacement égal à la somme du rayon (y) du point de focalisation de faisceau de chauffage et du double du rayon (x) du point de focalisation de faisceau de fusion ;
la méthode étant **caractérisée en ce que** lorsque le vecteur s'étendant entre le point de focalisation de faisceau de fusion et le point de focalisation de faisceau de chauffage est perpendiculaire (90 degrés) à la ligne de balayage de fusion, dans les premières lignes de balayage de fusion/chauffage, ou à 45 degrés de celle-ci, la méthode comprend une première étape de variation de l'angle du vecteur s'étendant entre les centres du point de focalisation de faisceau de fusion et le point de focalisation de faisceau de chauffage de +90 degrés entre les première et deuxième lignes de balayage, et une deuxième étape de variation de l'angle du vecteur s'étendant entre les centres du point de focalisation de faisceau de fusion et du point de focalisation de faisceau de chauffage de -135 degrés entre les deuxième et troisième lignes de balayage.

2. Méthode selon la revendication 1, les centres des points de focalisation étant séparés par un espacement minimum égal à y - x, y et x étant définis ci-dessus.

3. Méthode selon la revendication 1 ou 2, les centres des points de focalisation étant séparés par un espacement maximum égal à x + y, x et y étant définis ci-dessus.

4. Méthode selon une quelconque des revendications précédentes, comprenant en outre la variation de l'angle d'un vecteur s'étendant entre le centre du point de focalisation de faisceau de fusion et le centre du point de focalisation de faisceau de chauffage, entre deux lignes de balayage successives.

5. Méthode selon la revendication 4, comprenant la variation, par paliers, de l'angle du vecteur s'étendant entre les centres du point de focalisation de faisceau de fusion (10) et du point de focalisation de faisceau de chauffage (11A-11E) entre zéro et 180 degrés, chaque palier étant appliqué entre des lignes de balayage de fusion/chauffage successives et/ou la variation, de 180 degrés à zéro degré, par paliers de l'angle du vecteur s'étendant entre les centres du point de focalisation de faisceau de fusion et du point de focalisation de faisceau de chauffage, chaque palier étant appliqué entre des lignes de balayage de fusion/chauffage successives.

6. Méthode selon la revendication 4 ou 5, dans laquelle, lorsque le vecteur s'étendant entre le point de focalisation de faisceau de fusion et le point de focalisation de faisceau de chauffage est zéro degré relativement à la ligne de balayage de fusion dans les premières lignes de balayage de fusion/chauffage, la méthode comprend :
une première étape de variation, de + 90 degrés, de l'angle du vecteur s'étendant entre les centres du point de focalisation de faisceau de fusion et du point de focalisation de faisceau de chauffage entre les premières et deuxièmes lignes de balayage ;
une deuxième étape de variation, de + 90 degrés, de l'angle du vecteur s'étendant entre les centres du point de focalisation de faisceau de fusion et du point de focalisation de faisceau de chauffage entre les deuxièmes et troisièmes lignes de balayage ;
une troisième étape de variation, de - 135 degrés, de l'angle du vecteur s'étendant entre les centres du point de focalisation de faisceau de fusion et du point de focalisation de faisceau de chauffage entre les troisièmes et quatrièmes lignes de balayage ;
une quatrième étape de variation, de + 90 degrés, de l'angle du vecteur s'étendant entre les centres du point de focalisation de faisceau de fusion et du point de focalisation de faisceau de chauffage entre les quatrième et cinquième lignes de balayage ; et
une cinquième étape de variation, de - 135 degrés, de l'angle du vecteur s'étendant entre les centres du point de focalisation de faisceau de fusion et du point de focalisation de faisceau de chauffage entre les cinquièmes et sixièmes lignes de balayage.

7. Méthode selon la revendication 4 ou 5, le vecteur s'étendant entre le point de focalisation de faisceau de fusion et les points de focalisation de faisceau de chauffage se trouvant à zéro ou 45 degrés de la ligne de balayage de fusion dans les premières lignes de balayage de fusion/chauffage, la méthode comprenant une première étape de variation de l'angle du vecteur s'étendant entre les centres du point de focalisation de faisceau de fusion et du point de focalisation de faisceau de chauffage de + 135 degrés entre les premières et deuxièmes lignes de balayage, et un deuxième étape de variation de l'angle du vecteur s'étendant entre les centres du point de focalisation de faisceau de fusion et du point de focalisation de faisceau de chauffage de - 90 degrés entre les deuxièmes et troisièmes lignes de balayage.

8. Méthode selon la revendication 4 ou 5, dans laquelle, lorsque le vecteur s'étendant entre le point de focalisation de faisceau de fusion et le point de focalisation de faisceau de chauffage se trouve à zéro degré relativement à la ligne de balayage de fusion, dans les premières lignes de balayage de fusion/chauffage, la méthode comprend :
une première étape de variation, de + 135 degrés, de l'angle du vecteur s'étendant entre les centres du point de focalisation de faisceau de fusion et du point de focalisation de faisceau de chauffage entre les premières et deuxièmes lignes de balayage ;
une deuxième étape de variation, de - 90 degrés, de l'angle du vecteur s'étendant entre les centres du point de focalisation de faisceau de fusion et du point de focalisation de faisceau de chauffage entre les deuxièmes et troisièmes lignes de balayage ;
une troisième étape de variation, de + 135 degrés, de l'angle du vecteur s'étendant entre les centres du point de focalisation de faisceau de fusion et du point de focalisation de faisceau de chauffage entre les troisièmes et quatrièmes lignes de balayage ;
une quatrième étape de variation, de - 90 degrés, de l'angle du vecteur s'étendant entre les centres du point de focalisation de faisceau de fusion et du point de focalisation de faisceau de chauffage entre les quatrièmes et cinquièmes lignes de balayage ; et
une cinquième étape de variation, de - 90 degrés, de l'angle du vecteur s'étendant entre les centres du point de focalisation de faisceau de fusion et du point de focalisation de faisceau de chauffage entre les cinquièmes et sixièmes lignes de balayage.

9. Méthode selon une quelconque des revendications 1 à 3, comprenant :
la formation d'une couche supplémentaire de matériau en fusion en balayant le faisceau d'énergie de fusion sur une couche supplémentaire de matériau en poudre fusible dans une série supplémentaire de lignes de balayage de fusion tout en balayant le faisceau d'énergie de chauffage dans une série supplémentaire de lignes de balayage de chauffage sur le matériau en fusion supplémentaire fondu par le faisceau d'énergie en fusion ; et
entre la formation de la couche de matériau en fusion et la couche supplémentaire de matériau en fusion, la méthode comprenant en outre la variation de l'angle d'un vecteur s'étendant entre le centre du point de focalisation de faisceau de fusion et le centre du point de focalisation de faisceau de chauffage.

10. Appareil pour la réalisation d'un composant tridimensionnel par fabrication de couche additive, ledit appareil comprenant :
un générateur de faisceau d'énergie de fusion adapté pour générer un faisceau d'énergie de fusion possédant un point de focalisation de faisceau de fusion ;
un générateur de faisceau d'énergie de chauffage adapté pour générer un faisceau d'énergie de chauffage possédant un point de focalisation de faisceau de chauffage, le générateur de faisceau d'énergie de fusion étant adapté pour balayer le faisceau d'énergie de fusion sur une couche de matériau en poudre dans une série de lignes de balayage de fusion pour fusionner le matériau en poudre afin de former une couche de matériau fusionné, tandis que le générateur de faisceau d'énergie de chauffage est adapté pour balayer faisceau d'énergie de chauffage dans une série de lignes de balayage de chauffage sur le matériau fusionné par le faisceau d'énergie de fusion, de sorte que le centre du point de focalisation de faisceau de fusion et le centre du point de focalisation de faisceau de chauffage soient décalés l'un de l'autre, et séparés par un espacement égal à la somme du rayon (y) du point de focalisation de faisceau de chauffage et du double du rayon (x) du point de focalisation de faisceau de fusion,
**l'appareil étant caractérisée en ce qu'**en cours d'usage, le vecteur s'étendant entre le faisceau d'énergie de fusion et le faisceau d'énergie de chauffage est perpendiculaire (90 degrés) à la ligne de balayage de fusion dans les premières lignes de balayage de fusion/chauffage, ou à 45 degrés de celle-ci, le générateur de faisceau d'énergie de fusion et le générateur de faisceau d'énergie de chauffage étant adaptés, en premier lieu, pour varier, de + 90 degrés, l'angle du vecteur s'étendant entre les centres du faisceau d'énergie de fusion et du faisceau d'énergie de chauffage entre les première et deuxième lignes de balayage, et, en deuxième lieu, pour varier, de - 135 degrés, l'angle du vecteur s'étendant entre les centres du faisceau d'énergie de fusion et du faisceau d'énergie de chauffage entre les deuxième et troisième lignes de balayage.

11. Appareil selon la revendication 10, le générateur de faisceau d'énergie de fusion et le générateur de faisceau d'énergie de chauffage étant adaptés pour produire le faisceau d'énergie de fusion et le faisceau d'énergie de chauffage de telle façon que les centres des points de focalisation soient séparés par un espacement minimum égal à y - x, y et x étant définis ci-dessus.

12. Appareil selon la revendication 10 ou 11, le générateur de faisceau d'énergie de fusion et le générateur de faisceau d'énergie de chauffage étant adaptés pour produire le faisceau d'énergie de fusion et le faisceau d'énergie de chauffage de telle façon que les centres des points de focalisation soient séparés par un espacement maximum égal à x + y, y et x étant définis ci-dessus.

13. Appareil selon une quelconque des revendications 10 à 12, le générateur de faisceau d'énergie de chauffage étant adapté pour varier l'angle d'un vecteur s'étendant entre le centre du point de focalisation de faisceau de fusion et le point de focalisation de faisceau de chauffage, entre deux lignes de balayage successives, ou entre la formation de couches successives de matériau en fusion.

14. Appareil selon une quelconque des revendications 10 à 13, le générateur de faisceau de chauffage étant adapté pour moduler le faisceau d'énergie de chauffage par pulsion du faisceau d'énergie de chauffage.
